# EUROPÄISCHE PATENTANMELDUNG

(11) **EP 4 790 995 A1**
(43) Veröffentlichungstag der Anmeldung: **12.08.2026**
(21) Anmeldenummer: 25157166.7
(22) Anmeldetag: 11.02.2025
(51) Int. Cl.: H04N 19/20, G06T 9/00

(54) **DATENÜBERTRAGUNGSVERFAHREN FÜR VIDEOBILDDATEN UND SYSTEM ZUR ÜBERTRAGUNG VON VIDEOBILDDATEN**

(71) Anmelder: CASABLANCA.AI GMBH, 75172 Pforzheim (DE)
(72) Erfinder: Alles, Ivan, 75172 Pforzheim (DE)
(74) Vertreter: Meissner Bolte Partnerschaft mbB

(57) **Zusammenfassung**

Die vorliegende Erfindung betrifft ein Datenübertragungsverfahren für Videobilddaten sowie dessen Verwendung. Das Datenübertragungsverfahren umfasst dabei die folgenden Schritte: Erkennen einer Darstellung einer Person basierend auf einem Quellbild, umfassend Erzeugen, mittels eines Erscheinungsmerkmals-Encoders, eines Erscheinungsmerkmals-Tensors, wobei der Erscheinungsmerkmals-Tensor durch eine Vielzahl von zweidimensionalen Faltungen des Quellbilds erzeugt wird und Erzeugen, mittels eines Sendeeinheits-Posen-Encoders oder Empfangseinheits-Posen-Encoders, eines Quellposen-Latenzvektors eines Latenzraums des Sendeeinheits-Posen-Encoders oder Empfangseinheits-Posen-Encoders; sowie Übertragen des Quellposen-Latenzvektors und des Erscheinungsmerkmals-Tensors, oder alternativ des Quellbilds, von einer Sendeeinheit an eine Empfangseinheit und Ausführen der folgenden Schritte für ein Eingabebild von einer Vielzahl von Eingabebildern: Erkennen einer Pose für das Eingabebild, indem für das Eingabebild mittels des Sendeeinheits-Posen-Encoders ein Posen-Latenzvektor ermittelt wird; Übertragen des Posen-Latenzvektors von der Sendeeinheit an die Empfangseinheit und Erzeugen, durch die Empfangseinheit, eines Ausgabebilds basierend auf dem Erscheinungsmerkmals-Tensor, dem Quellposen-Latenzvektor und dem Posen-Latenzvektor. Ferner betrifft die Erfindung ein entsprechendes System und ein Computerprogrammprodukt. Darüber hinaus betrifft die Erfindung ein Verfahren zum Trainieren eines Videobilddaten-Datenübertragungsmodells.

## Beschreibung

Die vorliegende Erfindung betrifft ein Datenübertragungsverfahren für Videobilddaten sowie dessen Verwendung. Ferner betrifft die Erfindung ein entsprechendes System und ein Computerprogrammprodukt. Darüber hinaus betrifft die Erfindung ein Verfahren zum Trainieren eines Videobilddaten-Datenübertragungsmodells.

Bei der Übertragung von Videobilddaten, beispielsweise bei Videokonferenzen oder Videostreaming-Anwendungen, müssen große Datenmengen in kurzer Zeit übertragen werden, um hochaufgelöste Videobilddaten sowie eine flüssige Wiedergabe auf der Empfängerseite gewährleisten zu können. Insbesondere dann, wenn ein Mobilfunknetz zur Übertragung der Videobilddaten dient, sind die zur Verfügung stehenden Übertragungskapazitäten häufig vergleichsweise begrenzt bzw. teuer, sodass eine effiziente (ressourcenschonende) Datenübertragung von hoher Bedeutung ist.

Bekannte Videokompressionsverfahren nutzen die Redundanz der in den Videobilddaten enthaltenen Einzelbilder aus, die sich daraus ergibt, dass sich jeweils nur Teile der Bilder ändern, während andere gleichbleiben. Ein hoher Grad an Redundanz ergibt sich beispielsweise bei Videokonferenzen, bei denen die Videobilddaten häufig eine Person vor einem Hintergrund zeigen, wobei sich lediglich die Pose, Mimik bzw. Haltung der Person verändert, während der Hintergrund im Wesentlichen konstant bleibt.

Es ist daher bekannt, statt einer Übertragung der Einzelbilder, eine Übertragung von Differenzen zwischen aufeinanderfolgenden Bildern vorzunehmen. Dies führt zu einer deutlichen Reduktion der übertragenen Datenmenge. Zur Ermittlung der Differenzen zwischen den Einzelbildern ist es insbesondere bekannt, charakteristische Merkmalen eines Objekts in den Einzelbildern zu extrahieren. Hierzu kommen häufig aufwändige Techniken zum Einsatz, welche beispielsweise 3D-Modelle des Objekts benutzen, um die Bewegung des Objekts im Raum präzise modellieren zu können.

Die bekannten Lösungen haben den Nachteil, dass das Ermitteln der Differenzen zwischen aufeinanderfolgenden Bildern aufwändig ist.

Der vorliegenden Erfindung liegt die Aufgabe zugrunde, ein effizientes Datenübertragungsverfahren und ein entsprechendes System bereitzustellen. Insbesondere soll dabei das Volumen der für die Übertragung erzeugten Daten möglichst gering sein.

Erfindungsgemäß wird diese Aufgabe durch ein Datenübertragungsverfahren mit den Merkmalen des Anspruchs 1 und ein System zur Übertragung von Videobilddaten mit den Merkmalen des Anspruchs 10 gelöst. Weitere Aspekte der Erfindung betreffen ein Verfahren zum Trainieren eines Videobilddaten-Übertragungsmodells mit den Merkmalen des Anspruchs 9, eine Verwendung des erfindungsgemäßen Datenübertragungsverfahrens gemäß Anspruch 14, sowie ein Computerprogrammprodukt gemäß Anspruch 15. Vorteilhafte Ausgestaltungen und Weiterbildungen ergeben sich aus den abhängigen Ansprüchen.

Dementsprechend umfasst das erfindungsgemäße Datenübertragungsverfahren für Videobilddaten die folgenden Schritte:
a) Erkennen einer Darstellung einer Person basierend auf einem Quellbild, umfassend
   a1) Erzeugen, mittels eines Erscheinungsmerkmals-Encoders, eines Erscheinungsmerkmals-Tensors,
      wobei der Erscheinungsmerkmals-Tensor durch eine Vielzahl von zweidimensionalen Faltungen des Quellbilds erzeugt wird;
   a2) Erzeugen, mittels eines Sendeeinheits-Posen-Encoders oder Empfangseinheits-Posen-Encoders, eines Quellposen-Latenzvektors eines Latenzraums des Sendeeinheits-Posen-Encoders oder Empfangseinheits-Posen-Encoders; und
b) Übertragen des Quellposen-Latenzvektors und des Erscheinungsmerkmals-Tensors, oder alternativ des Quellbilds, von einer Sendeeinheit an eine Empfangseinheit;
c) Ausführen der folgenden Schritte für ein Eingabebild von einer Vielzahl von Eingabebildern:
   c1) Erkennen einer Pose für das Eingabebild, indem für das Eingabebild mittels des Sendeeinheits-Posen-Encoders ein Posen-Latenzvektor ermittelt wird;
   c2) Übertragen des Posen-Latenzvektors von der Sendeeinheit an die Empfangseinheit;
   c3) Erzeugen, durch die Empfangseinheit, eines Ausgabebilds basierend auf dem Erscheinungsmerkmals-Tensor, dem Quellposen-Latenzvektor und dem Posen-Latenzvektor.

Ein Gedanke der vorliegenden Erfindung ist es, einmalig Informationen über eine Darstellung einer in den Videobilddaten dargestellten Person zu erfassen, die zusammen mit Informationen über die Pose bzw. Mimik der Person in den jeweiligen Einzelbildern eine Rekonstruktion der Videobilddaten auf Empfängerseite ermöglichen. Indem die Informationen über die Darstellung der Person nur einmalig (oder bei relevanten Änderungen) erfasst werden müssen, und die Informationen über die Pose bzw. Mimik erfindungsgemäß in einer datentechnisch kompakten Repräsentation erfasst und übermittelt werden können, ist das Datenübertragungsverfahren insgesamt effizient.

Die Erkennung der Darstellung der Person umfasst erfindungsgemäß zwei Schritte, die auf der Grundlage eines Quellbilds (das die Person zeigt) durchgeführt werden: das Erzeugen eines Erscheinungsmerkmals-Tensors und das Erzeugen eines Quellposen-Latenzvektors.

Unter Erscheinungsmerkmalen werden erfindungsgemäß Merkmale der Erscheinung einer Person verstanden, die im Wesentlichen unverändert bleiben, wie beispielsweise Hautfarbe, Haarfarbe, Haarstruktur, etc. Obwohl sich auch bei diesen Merkmalen ggf. geringe Abweichungen durch wechselnde Beleuchtungsverhältnisse o.ä. ergeben können, werden diese Merkmale als im Wesentlichen konstant angesehen.

Unter Pose werden erfindungsgemäß zusammenfassend sämtliche Merkmale verstanden, welche die Haltung der Person betreffen, insbesondere des Kopfes der Person, insbesondere Kopfposition, Kopfhaltung, Blickrichtung, Gesichtsausdruck, etc. Derartige Merkmale ändern sich typischerweise häufig im Verlauf der Einzelbilder, die in den Videobilddaten angegeben sind.

Erfindungsgemäß wird der Erscheinungsmerkmal-Tensor mittels eines Erscheinungsmerkmals-Encoders durch zweidimensionale Faltungen des Quellbilds erzeugt.

Im Kontext von digitaler Bildverarbeitung ist eine zweidimensionale Faltung (engl.: convolution) eine mathematische Operation, die für zweidimensionale Eingabe-Bilddaten basierend auf einer Faltungsmatrix zweidimensionale Ausgabe-Bilddaten liefert. Dabei entspricht jedes Pixel in den Ausgabe-Bilddaten einem gewichteten Mittelwert von Pixeln aus der Umgebung des Pixels in den Eingabe-Bilddaten. Die Gewichtswerte werden dabei durch die Faltungsmatrix bestimmt. Die Faltungsmatrix (auch Kernel genannt) kann beispielsweise eine 3x3-Matrix oder 5x5-Matrix sein.

Insbesondere kann jedes Element des Erscheinungsmerkmals-Tensors durch die folgenden Angaben gekennzeichnet sein: Batch-ID, Erscheinungsmerkmals-Daten, x-Position, y-Position.

Die Verwendung von Batches erlaubt es, das Trainieren des Erscheinungsmerkmals-Encoders effizienter zu machen, indem für das Training verwendete Bilder zu Stapeln (engl. batches) zusammengefasst werden, die in einem einzelnen Schritt des Trainingsverfahrens verwendet werden.

Die Erscheinungsmerkmals-Daten können beispielsweise eine Dimension von der Größe 32, 64, 128, 256, 512 oder anderen Zweierpotenzen haben.

Die x- und y-Koordinaten beziehen sich auf das entsprechende Koordinatensystem der Bilddaten, die durch die zweidimensionale Faltung des Eingangsbilds erhalten wurden.

Somit kann der erfindungsgemäße Erscheinungsmerkmal-Tensor als hochdimensionale Datenstruktur verstanden werden, in der jeder zweidimensionalen Position (gekennzeichnet durch x- und y-Koordinate) der oben beschriebenen Faltung des Quellbilds Erscheinungsmerkmals-Daten zugeordnet sind, welche Erscheinungsmerkmale der Darstellung der Person angeben.

Ein Vorteil des erfindungsgemäßen Verfahrens liegt somit darin, durch die Verwendung von zweidimensionalen Faltungen des Quellbilds eine Datenstruktur (Erscheinungsmerkmals-Tensor) erzeugt wird, in der die Erscheinungsmerkmale zweidimensionalen Positionsdaten zugeordnet sind. Durch diesen erfindungsgemäßen Ansatz ist keine aufwändige Verarbeitung dreidimensionaler Koordinaten erforderlich, was zu einem effizienten Verfahren führt. Auch ist aus diesem Grund die betreffende Datenstruktur, d.h. der Erscheinungsmerkmals-Tensor, kompakter als in einem Fall, in dem dreidimensionale Positionsdaten verwendet werden.

Das Erzeugen des Quellposen-Latenzvektors erfolgt erfindungsgemäß mittels eines Posen-Encoders, der in der Sendeeinheit oder der Empfangseinheit angeordnet sein kann (Sendeeinheits-Posen-Encoder bzw. Empfangseinheits-Posen-Encoder). Der Quellposen-Latenzvektor ist dabei in einem Latenzraum des Sendeeinheits- bzw. Empfangseinheits-Posen-Encoders definiert.

Ein Latenzraum (auch bekannt als latenter Merkmalsraum oder Einbettungsraum) ist ein Vektorraum, der zur Einbettung einer Menge von Objekten dienen kann. Die Position der Objekte innerhalb des Latenzraums wird dabei durch Latenzvektoren definiert. Diese können so definiert sein, dass Objekte, die einander ähneln, näher beieinander liegen. Die Dimensionalität des Latenzraums kann dabei so gewählt werden, dass sie geringer ist als die Dimensionalität des Merkmalsraums, aus dem die Datenpunkte stammen. Auf diese Weise können beispielsweise Bilddaten auf relevante Merkmale reduziert werden, die in einem Latenzraum definiert sind.

Die in dem erfindungsgemäßen Verfahren erzeugten Posen-Latenzvektoren können beispielsweise eine Dimension der Größe 20 haben.

Vorteilhaft an der Verwendung von Latenzvektoren bei dem Verfahren der vorliegenden Erfindung ist, dass in Latenzräumen geeigneter Encoder Muster auftreten, die es ermöglichen, maschinell zu lernen, wie sich ein Latenzvektor verändert, wenn sich z. B. der Kopf einer Person bewegt, insbesondere, wenn sich der Kopf dreht, z. B von links nach rechts oder umgekehrt. Dabei können erfindungsgemäß die im Latenzraum auftretenden Muster unmittelbar anhand von Trainingsbildern erlernt werden und dann auf eine andere Person übertragen werden, sodass es möglich ist, die Pose einer Person anhand von Posen-Latenzvektoren zu rekonstruieren.

Die Forschung auf dem Gebiet des maschinellen Lernens hat dabei gezeigt, dass das maschinelle Lernen von (abstrakten) Mustern unmittelbar aus Daten häufig bessere Ergebnisse als Ansätze liefert, bei denen vorgegebene Merkmale extrahiert werden ("feature engineering").

Ein weiterer Vorteil, der sich aus diesem Aspekt der erfindungsgemäßen Lösung ergibt, besteht darin, dass ein unüberwachtes Trainieren der entsprechenden KI-Einheiten (z.B. des Erscheinungsmerkmals-Encoders und des Posen-Encoders) möglich ist, da alle für das Trainieren notwendigen Informationen in den Videobilddaten selbst enthalten sind. Als Trainingsdaten können somit beliebige geeignete Videobilddaten verwendet werden, welche den Kopf einer Person zeigen. Derartige Videobilddaten sind in großen Mengen verfügbar, beispielsweise auf Videoplattformen im Internet. Somit ist es möglich, das Modell, das dem erfindungsgemäßen Verfahren zugrunde liegt, in effizienter Weise zu trainieren.

Die initiale Erkennung der Darstellung der Person, umfassend das Erzeugen des Erscheinungsmerkmals-Tensors und des Quellposen-Latenzvektors, wird dabei vorzugsweise nur einmalig ausgeführt. Es ist aber auch möglich, die Erkennung mehrfach durchzuführen, beispielsweise um geänderte Erscheinungsmerkmale, die auf eine Änderung der Lichtverhältnisse zurückgeht, erfassen zu können.

Das Erkennen der Darstellung der Person kann entweder empfängerseitig oder senderseitig, jeweils auf der Grundlage des Quellbilds, durchgeführt werden. Dementsprechend wird in Schritt b) des erfindungsgemäßen Verfahrens entweder
i) die senderseitig erzeugten Vektoren bzw. Tensoren (Erscheinungsmerkmals-Tensor und Quellposen-Latenzvektor) an die Empfangseinheit übertragen; oder alternativ
ii) das Quellbild an die Empfangseinheit übertragen, woraufhin die Empfangseinheit den Schritt a) des Verfahrens durchführt.

Schritt c) des Verfahrens umfasst schließlich eine Reihe von Schritten, die für ein Eingabebild einer Vielzahl von Eingabebildern ausgeführt werden, welche die zu übertragenden Videobilddaten darstellen:
- das Erkennen einer Pose für das Eingabebild, indem mittels des Sendeeinheits-Posen-Encoders ein Posen-Latenzvektor erzeugt wird;
- das Übertragen des Posen-Latenzvektors von der Sendeeinheit an die Empfangseinheit; und
- das Erzeugen, durch die Empfangseinheit, eines entsprechenden Ausgabebilds, basierend auf dem Erscheinungsmerkmals-Tensor, dem Quellposen-Latenzvektor und dem Posen-Latenzvektor.

Das Erkennen der Pose mittels Erzeugen eines Posen-Latenzvektors ist dabei aus den Gründen vorteilhaft, die oben im Zusammenhang mit der Erzeugung des Quellposen-Latenzvektors genannt sind.

Insbesondere kann erfindungsgemäß das Erzeugen des Ausgabebilds (bzw. die Rekonstruktion des Eingabebilds) derart erfolgen, dass dies ausschließlich basierend auf dem Erscheinungsmerkmals-Tensor, der Quellposen-Latenzvektor und dem Posen-Latenzvektor erfolgt.

Insgesamt ermöglicht das erfindungsgemäße Verfahren somit eine effiziente Übertragung von Videobilddaten, da das Volumen der Daten, die für die Übertragung erzeugt werden, vergleichsweise gering ist. Indem das erfindungsgemäße Verfahren in der Lage ist, die Pose der dargestellten Person mit hoher Genauigkeit und ausschließlich datenbasiert zu lernen, können Ausgabebilder mit hoher Qualität erzeugt werden.

In einer Ausführungsform gibt der Erscheinungsmerkmals-Tensor ein oder mehrere Erscheinungsmerkmale an, die Farbmerkmale und/oder Formmerkmale der dargestellten Person beschreiben, insbesondere Hautfarbe, Haarfarbe und/oder Haarstruktur. Derartige Merkmale bleiben im Wesentlichen konstant, sodass das Erfassen dieser Merkmale in dem vorzugsweise einmalig übertragenen Erscheinungsmerkmals-Tensor vorteilhaft ist.

In einer weiteren Ausführungsform beschreibt der Quellposen-Latenzvektor und/oder der Posen-Latenzvektor eine Pose, Gesichtsausdruck und/oder Blickrichtung der dargestellten Person.

Auf diese Weise kann durch die Verwendung von Latenzvektoren bzw. Latenzräumen die Darstellung der Person, insbesondere deren Kopf, sehr akkurat beschrieben und rekonstruiert werden. Die Pose des Kopfes, die Form des Gesichts, der Gesichtsausdruck, das etwaige Tragen einer Brille und die Darstellung der Haare können bei der Erzeugung des Ausgabebilds sehr wirklichkeitsgetreu wiedergegeben werden.

Bei der Repräsentation des Gesichtsausdrucks durch einen Latenzvektor wird dabei insbesondere berücksichtigt, ob eine Ausdrucksveränderung durch eine Bewegung des Kopfes oder der Blickrichtung der aufgenommenen Person erfolgt oder ob sich der Gesichtsausdruck als solcher verändert. Bei dem erfindungsgemäßen Verfahren wird eine solche Gesichtsausdrucksveränderung beispielsweise durch eine Veränderung der Form des Mundes der aufgenommenen Person erkannt. Das erfindungsgemäße Verfahren unterscheidet dies, da nur die Pose des Kopfes und/oder die Blickrichtung verändert wird, nicht jedoch der eigentliche Gesichtsausdruck, der beispielsweise ein Lächeln darstellt. Diese Trennung zwischen der Veränderung der Pose des Kopfes einerseits und dem Gesichtsausdruck andererseits kann durch erkannte Muster im Latenzraum bei dem erfindungsgemäßen Verfahren ermöglicht werden.

In einer weiteren Ausführungsform werden die Schritte a1) und a2) von der Sendeeinheit ausgeführt. Hierbei wird in Schritt b) nur der Quellposen-Latenzvektor und der Erscheinungsmerkmals-Tensor übertragen.

Mit anderen Worten erfolgt hierbei das Erfassen der Darstellung der Person durch die Sendeeinheit, d.h. der Erscheinungsmerkmals-Encoder ist in der Sendeeinheit angeordnet und Schritt a2) wird durch den Sendeeinheits-Posen-Encoder durchgeführt, und die erfassten Informationen werden in Form des Quellposen-Latenzvektors und des Erscheinungsmerkmals-Tensors an die Empfangseinheit übertragen. Da die Datenmenge des Quellposen-Latenzvektor und des Erscheinungsmerkmal-Tensors typischerweise gering im Vergleich zu den Bilddaten des Quellbilds ist, kann so auf eine Übertragung des Quellbilds an die Empfangseinheit verzichtet werden. Dies reduziert die Menge an Daten, die zwischen Sendeeinheit und Empfangseinheit übertragen werden.

In einer weiteren Ausführungsform wird zunächst das Quellbild von der Sendeeinheit an die Empfangseinheit übertragen, und die Schritte a1) und a2) werden anschließend von der Empfangseinheit ausgeführt, d.h. der Erscheinungsmerkmals-Encoder ist in der Empfangseinheit angeordnet, und Schritt a2) wird mittels des Empfangseinheits-Posen-Encoders durchgeführt.

Anders als in der vorherigen Ausführungsform erfolgt gemäß dieser Ausführungsform das Erkennen der Darstellung der Person auf der Seite der Empfangseinheit, nämlich durch den dort angeordneten Erscheinungsmerkmals-Encoder und den Empfangseinheits-Posen-Encoder. Dies hat den Vorteil, dass ein Erscheinungsmerkmals-Encoder nur in der Empfangseinheit, nicht in der Sendeeinheit implementiert sein muss.

In einer weiteren Ausführungsform umfasst das Erzeugen des Ausgabebilds die folgenden Schritte:
- Erzeugen, durch einen Kopfmodell-Generator, einer Zwischendarstellung basierend auf dem Quellposen-Latenzvektor und dem Posen-Latenzvektor; und
- Erzeugen des Ausgabebilds durch eine Warp-Einheit basierend auf der Zwischendarstellung und dem Erscheinungsmerkmals-Tensor.

Der Kopfmodell kann insbesondere ein faltendes neuronales Netzwerk (engl. convolutional neural network, CNN) sein. Als Ausgangsblock des Kopfmodells können Fouriermerkmale verwendet werden.

Die von dem Kopfmodell erzeugte Zwischendarstellung kann als Bild bzw. Bilddaten aufgefasst werden, in dem jedem Pixel ein oder mehrere Merkmale zugeordnet sind. Das eine oder die mehreren Merkmale geben die Pose des Kopfes an, die aus dem Posen-Latenzvektor und dem Quellposen-Latenzvektor rekonstruiert worden ist.

Mit anderen Worten sind auf einer bildlichen Darstellung der Zwischendarstellung Merkmale wie Pose des Kopfes, Gesichtsausruck, Kontur einer Brille, Frisur, Augen, etc. zu erkennen (aber keine Farb- oder sonstige Erscheinungsmerkmale).

Wie Warp-Einheit kann ein faltendes neuronales Netz sein oder ein solches umfassen.

Die Warp-Einheit kann dazu ausgebildet sein, ein Forward-Warp und/oder Backward-Warp durzuführen.

Die Warping-Technik beschreibt bei der Bildverarbeitung ein Verformen und/oder Verzerren eines Bildes. Bei der Transformation eines Bildes wird die Information benötigt, wie ein einzelner Pixel eines Bildes, das transformiert werden soll, beim Erzeugen des neuen Bildes bewegt werden soll. Es gibt verschiedene Möglichkeiten diese Transformation durchzuführen. Zum einen ist es möglich, dass für jede Position im Eingabebild der Warp-Einheit der korrespondierende Wert im Ausgabebild der Warp-Einheit berechnet wird. Dieses Verfahren wird als Forward-Warping bezeichnet, da die Pixel vorwärts von dem Koordinatengerüst des Eingabebildes der Warp-Einheit in das neue Bild bewegt werden. Nachteilig an diesem Verfahren kann sein, dass nicht jedem Pixel des neuen Bildes zwangsläufig ein Wert zugewiesen werden kann und auf einige Pixel im neuen Bild können auch mehrere Pixel des Eingabebildes der Warp-Einheit weisen. Bei einem Backward-Warp wird für jedes Pixel des neuen Bildes (d.h. dem Ausgabebild der Warp-Einheit) eine Koordinate im Ursprungsbild (d.h. dem Eingabebild der Warp-Einheit) berechnet, von der sein Wert ausgeht. Es handelt sich dabei um die Umkehrung der Transformationsfunktion. Beim Backward-Warping kann ein Interpolationsschema für das Eingabebild der Warp-Einheit verwendet werden, um Werte an Koordinaten zwischen Pixeln zu erhalten.

Die Backward-Warping-Technik kann erfindungsgemäß insbesondere eingesetzt werden, um Farbmerkmale und andere Erscheinungsmerkmale für die Zwischendarstellung basierend auf dem Erscheinungsmerkmals-Tensor zu erzeugen. Die Warping-Operation der Warping-Einheit erfolgt dabei getrennt von der Erzeugung der Zwischendarstellung durch den Kopfmodell-Generator eingesetzt. Durch diese Trennung von Warping-Einheit und Kopfmodell-Generator unterschiedet sich das erfindungsgemäße Verfahren z. B. von bekannten LIA (Latent Image Animator)-Verfahren. Durch den Kopfmodell-Generator wird die Darstellung des Kopfes rekonstruiert; durch die Warp-Einheit die Darstellung der Person einschließlich der Pose und Farbmerkmale.

Die Warp-Einheit kann das Ausgangsbild insbesondere basierend auf dem Erscheinungsmerkmals-Tensor und einem Flow-Tensor erzeugen, der basierend auf der Zwischendarstellung erzeugt wird.

In der beschriebenen Ausführungsform kann die resultierende Architektur aus Erscheinungsmerkmals-Encoder, Sendeeinheits-Posen-Encoder, Empfangseinheits-Posen-Encoder (sofern vorhanden), Warp-Einheit und Kopfmodell-Generator als ein zusammenhängendes Modell (Videobilddaten-Datenübertragungsmodell) verstanden werden.

In einer weiteren Ausführungsform umfasst das Verfahren ferner ein Modifizieren des Posen-Latenzvektors, insbesondere zur Modifikation einer Blickrichtung der dargestellten Person. Dabei wird in Schritt c3) das Ausgabebild basierend auf dem Quellposen-Latenzvektor, dem Erscheinungsmerkmals-Tensor sowie dem modifizierten Posen-Latenzvektor erzeugt.

Hierzu kann erfindungsgemäß eine Blickrichtungs-Verarbeitungseinheit in der Sendeeinheit oder der Empfangseinheit vorgesehen sein, welche zu dem ursprünglichen Posen-Latenzvektor (Quell-Latenzvektor) einen modifizierten Posen-Latenzvektor (Ziel-Latenzvektor) berechnet. Der Ziel-Latenzvektor wird dabei so berechnet, dass er Ziel-Latenzvektor zumindest eine Ziel-Blickrichtung und/oder eine Ziel-Pose des Kopfes repräsentiert.

Diese Ausführungsform eignet sich besonders bei einer Verwendung des Datenübertragungsverfahrens im Kontext von Videokonferenzanwendungen.

Bei einer Videokonferenz ergibt sich häufig das Problem, dass sich kein direkter Blickkontakt zwischen den Nutzern ergibt, da häufig die Bildaufnahmevorrichtung (Kamera), die einen ersten Nutzer aufnimmt, nicht an der gleichen Position angeordnet ist, wie die Anzeigevorrichtung (Bildschirm) des ersten Nutzers, auf der die Darstellung des zweiten Nutzers wiedergegeben wird. Wenn nämlich der erste Nutzer die Darstellung des zweiten Nutzers auf seiner Anzeigevorrichtung betrachtet, blickt der erste Nutzer nicht in die Bildaufnahmevorrichtung, so dass bei der Darstellung des ersten Nutzers bei der Anzeigevorrichtung des zweiten Nutzers dieser erste Nutzer so dargestellt wird, dass er nicht in die Augen des zweiten Nutzers blickt. Wenn der erste Nutzer umgekehrt in die Bildaufnahmevorrichtung blickt, so dass sich bei der Darstellung des ersten Nutzers auf der Anzeigevorrichtung des zweiten Nutzers ein Blickkontakt zwischen den Nutzern ergibt, kann der erste Nutzer auf seiner Anzeigevorrichtung die Darstellung des zweiten Nutzers nur peripher erfassen.

Mit dem erfindungsgemäßen Verfahren gemäß dieser Ausführungsform ist es möglich, eine Korrektur der Blickrichtung der Nutzer während der Übertragung der Videobilddaten vorzunehmen. So ist es möglich, Videobilddaten in Echtzeit zu erzeugen, bei denen die Pose des Kopfes und/oder die Blickrichtung so verändert wurden, dass sich ein wirklichkeitsgetreuer Blickkontakt ergibt, ohne dass spezielle Hardware für die Berechnung der veränderten Videobilddaten erforderlich ist.

Indem die Korrektur der Blickrichtung erfindungsgemäß durch Modifizieren des Posen-Latenzvektors erfolgt, muss eine vergleichsweise geringe Datenmenge verarbeitet werden, wodurch das Datenübertragungsverfahren besonders effizient ist.

In einer weiteren Ausführungsform ist das Quellbild eines der Vielzahl von Eingabebildern, beispielsweise das erste Eingabebild (in der zeitlich sortierten Folge der Eingabebilder). Dies hat den Vorteil, dass keine weiteren Bilddaten erforderlich sind, sondern eines der Eingabebilder, das ohnehin vorliegt, als Quellbild verwendet werden kann.

Es ist aber auch denkbar, ein Quellbild zu verwenden, das nicht aus der Vielzahl von Eingabebildern ausgewählt ist, solange es dieselbe Person wie die Eingabebilder der zu übertragenden Videobilddaten zeigt, vorzugsweise in ähnlicher Darstellung.

Ferner kann das Quellbild auch auf der Grundlage mehrerer Bilder erzeugt werden, beispielsweise als Kombination mehrerer Eingabebilder oder mehrerer sonstiger Bilder. Dies erlaubt eine gewisse Durchschnittsbetrachtung der zu erfassenden Erscheinungsmerkmale, in der etwaige Anomalien eines einzelnen Bildes in den Hintergrund treten. Dies hat somit den Vorteil, dass die relevanten Erscheinungsmerkmale der Person besonders zuverlässig erfasst werden können.

Das erfindungsgemäße Verfahren zum Trainieren eines Videobilddaten-Datenübertragungsmodells, das einen Erscheinungsmerkmals-Encoder, einen Posen-Encoders, einen Kopfmodell-Generator und eine Warp-Einheit aufweist, umfasst die folgenden Schritte:
a) Erkennen einer Darstellung einer Person basierend auf einem Quellbild, umfassend
   a1) Erzeugen, mittels des Erscheinungsmerkmals-Encoders, eines Erscheinungsmerkmals-Tensors,
      wobei der Erscheinungsmerkmals-Tensor durch eine Vielzahl von zweidimensionalen Faltungen des Quellbilds erzeugt wird;
   a2) Erzeugen, mittels des Posen-Encoders, eines Quellposen-Latenzvektors eines Latenzraums des Posen-Encoders; und
b) Ausführen der folgenden Schritte für jedes Eingabebild einer Vielzahl von Eingabebildern:
   b1) Erkennen einer Pose für das Eingabebild, indem für das Eingabebild mittels des Posen-Encoders ein Posen-Latenzvektor ermittelt wird;
   b2) Erzeugen, durch den Kopfmodell-Generator, einer Zwischendarstellung basierend auf dem Quellposen-Latenzvektor und dem Posen-Latenzvektor;
   b3) Erzeugen des Ausgabebilds durch die Warp-Einheit basierend auf der Zwischendarstellung und dem Erscheinungsmerkmals-Tensor;
   b4) Berechnen eines Verlustfunktionswerts basierend auf einem Vergleich zwischen dem Eingabebild und dem Ausgabebild;
   b5) Verändern von einem oder mehreren Parametern des Videobilddaten-Datenübertragungsmodells basierend auf dem Verlustfunktionswert.

Dementsprechend wird das Videobilddaten-Datenübertragungsmodell gemäß einem Ende-zu-Ende-Trainingsverfahren trainiert. Hierbei werden basierend auf einem einzelnen Verlustfunktionswert diverse Parameter in den einzelnen Einheiten des Videobilddatenübertragungs-Modells angepasst, wobei der Verlustfunktionswert auf einem Vergleich des Eingangsbilds und des entsprechenden erzeugten Ausgangsbilds beruht. Ein separates Trainieren der einzelnen Einheiten ist bei dem erfindungsgemäßen Trainingsverfahren somit nicht erforderlich.

In einer Ausführungsform des Trainingsverfahrens werden in Schritt b5) ein oder mehrere Parameter von dem Erscheinungsmerkmals-Encoder, dem Posen-Encoders (12), dem Kopfmodell-Generator und/oder der Warp-Einheit angepasst.

Das oben beschriebene erfindungsgemäße Trainingsverfahren kann insbesondere zum Trainieren eines Videobilddaten-Datenübertragungsmodells des erfindungsgemäßen Datenübertragungsverfahrens eingesetzt werden.

Das erfindungsgemäße System zur Übertragung von Videobilddaten weist eine Sendeeinheit und eine Empfangseinheit auf.

Die Sendeeinheit oder die Empfangseinheit weist einen Erscheinungsmerkmals-Encoder auf und ist dazu ausgebildet ist,
a) eine Darstellung einer Person zu erkennen, basierend auf einem Quellbild, umfassend
   a1) Erzeugen, mittels des Erscheinungsmerkmals-Encoders, eines Erscheinungsmerkmals-Tensors,
      wobei der Erscheinungsmerkmals-Tensor durch eine Vielzahl von zweidimensionalen Faltungen des Quellbilds erzeugt wird;
   a2) Erzeugen, mittels eines Sendeeinheits-Posen-Encoders oder eines Empfangseinheits-Posen-Encoders, eines Quellposen-Latenzvektors eines Latenzraums des Sendeeinheits-Posen-Encoders oder eines Empfangseinheits-Posen-Encoders.

Die Sendeeinheit ist dazu ausgebildet, die folgenden Schritte auszuführen:
b) Übertragen des Quellposen-Latenzvektors und des Erscheinungsmerkmals-Tensors, oder alternativ des Quellbilds, von der Sendeeinheit an die Empfangseinheit;
c) Ausführen der folgenden Schritte für jedes Eingabebild von einer Vielzahl von Eingabebildern:
   c1) Erkennen einer Pose für das Eingabebild, indem für das Eingabebild mittels des Sendeeinheits-Posen-Encoders ein Posen-Latenzvektor ermittelt wird;
   c2) Übertragen des Posen-Latenzvektors von der Sendeeinheit an die Empfangseinheit.

Die Empfangseinheit weist einen Kopfmodell-Generator und eine Warp-Einheit auf und ist dazu ausgebildet, für das Eingabebild von der Vielzahl von Eingabebildern ein Ausgabebild zu erzeugen, das mit dem Eingangsbild korrespondiert, indem
- durch den Kopfmodell-Generator basierend auf dem Quellposen-Latenzvektor und dem Posen-Latenzvektor eine Zwischendarstellung erzeugt wird; und
- durch die Warp-Einheit basierend auf der Zwischendarstellung und dem Erscheinungsmerkmals-Tensor das Ausgabebild erzeugt wird.

Somit ist das erfindungsgemäße System insbesondere dazu ausgebildet, das vorstehend beschriebene Datenübertragungsverfahren auszuführen. Es weist somit dieselben Vorteile auf.

In einer Ausführungsform handelt es sich bei dem Erscheinungsmerkmals-Encoder und/oder dem Posen-Encoder um (jeweils) ein CNN.

Gerade für den Posen-Encoder, der für jedes Eingangsbild der zu übertragenden Videobilddaten (mit beispielsweise 30 Eingangsbildern pro Sekunde) ausgeführt wird, wird ein CNN bevorzugt, welches schnell arbeitet, d.h. eine möglichst geringe Rechenzeit benötigt.

Daher sind CNNs mit wenigen Parametern und/oder wenigen Schichten besonders geeignet. Geeignete Beispiele sind beispielsweise die CNNs Mobilenet (speziell für die Ausführung auf Smartphones entwickelt) und AES-Net.

In einer Ausführungsform des Systems weist die Sendeeinheit und/oder die Empfangseinheit ferner eine Blickrichtungs-Korrektureinheit auf, welche dazu ausgebildet ist, zu dem Posen-Latenzvektor einen modifizierten Posen-Latenzvektor zu erzeugen, der hinsichtlich einer Blickrichtung der dargestellten Person modifiziert ist. Die Warp-Einheit ist dabei dazu ausgebildet, das Ausgabebild basierend auf dem Quellposen-Latenzvektor, dem Erscheinungsmerkmals-Tensor sowie dem modifizierten Posen-Latenzvektor zu erzeugen.

Es versteht sich von selbst, dass die Merkmale und die damit jeweils erzielbaren Vorteile, die in Bezug auf das erfindungsgemäße Verfahren beschrieben wurden, auf die erfindungsgemäßen Vorrichtungen anwendbar bzw. übertragbar sind und umgekehrt. Konkret sind die Komponenten der Vorrichtungen im Kontext der vorliegenden Beschreibung der Erfindung dazu ausgebildet, die erfindungsgemäßen Verfahrensschritte durchzuführen. Ebenso sind die Funktionen der oben beschriebenen Komponenten der erfindungsgemäßen Vorrichtungen als Verfahrensschritte des erfindungsgemäßen Verfahrens anwendbar.

Des Weiteren betrifft die Erfindung ein Computerprogrammprodukt, umfassend Befehle, die bei der Ausführung des Programms durch einen Computer diesen veranlassen, das vorstehend beschriebene Verfahren auszuführen.

Im Folgenden werden Ausführungsbeispiele der Erfindung mit Bezug zu den Zeichnungen erläutert:
- Fig. 1: zeigt einen Ablauf des erfindungsgemäßen Datenübertragungsverfahrens gemäß einem Ausführungsbeispiel;
- Fig. 2a: zeigt den Aufbau und Datenfluss in dem erfindungsgemäßen System gemäß einem Ausführungsbeispiel;
- Fig. 2b: zeigt den Aufbau und Datenfluss in dem erfindungsgemäßen Systems gemäß einem weiteren Ausführungsbeispiel; und
- Fig. 3 und 4: zeigen Beispielbilder, die beim Trainieren des in dem erfindungsgemäßen System eingesetzten Kopfmodell-Generators sowie durch die Warp-Einheit erzeugt werden,

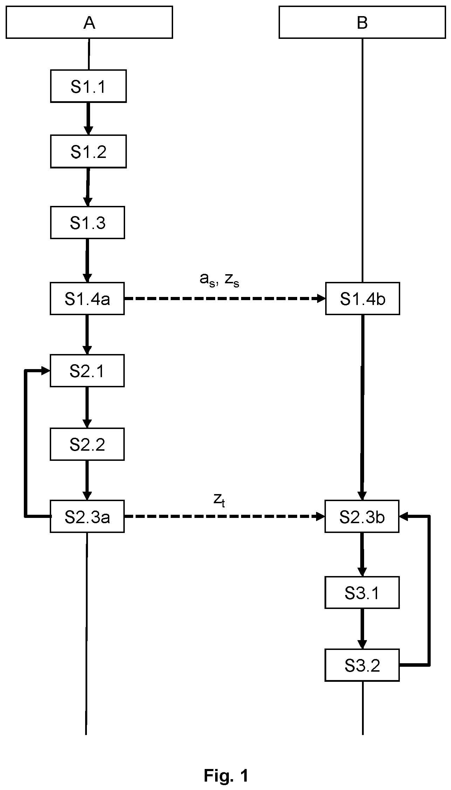

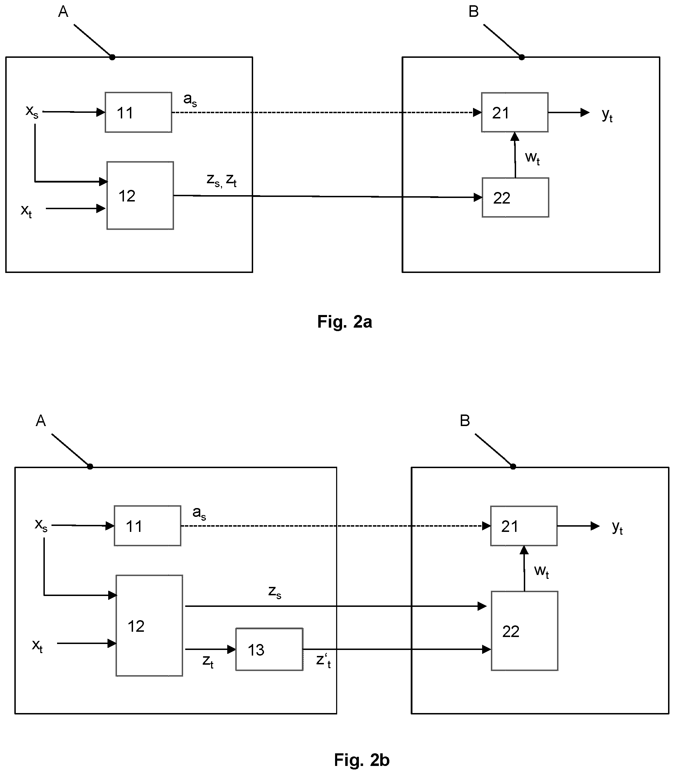

Figur 1 zeigt den Ablauf des erfindungsgemäßen Datenübertragungsverfahrens gemäß einem Ausführungsbeispiel. Das Verfahren kann insbesondere von einem der Systeme ausgeführt werden, die weiter unten im Zusammenhang mit Figuren 2a-b beschrieben werden.

Hierbei sollen Videobilddaten (gegeben durch eine zeitlich sortierte Folge von Eingabebildern x₁, x₂, ..., xₙ), welche den Kopf einer Person zeigen, von der Sendeeinheit A an die Empfangseinheit B übertragen werden.

Dabei werden die nachfolgend beschriebenen Schritte S1.1, S1.2, S1.3, S1.4a, S2.1, S2.2 und S2.3a von der Sendeeinheit A ausgeführt, und die Schritte S1.4b, S2.3b, S3.1 und S3.2 von der Empfangseinheit B.

In Schritt S1.1 wird das Quellbild xₛ geladen. Hierzu kann insbesondere das erste Bild der zu übertragenden Videobilddaten extrahiert und als Quellbild xₛ verwendet werden (d.h. s=1).

In Schritt S1.2 wird basierend auf dem Quellbild xₛ ein Erscheinungsmerkmals-Tensor aₛ erzeugt, der Erscheinungsmerkmale wie z.B. Farbmerkmale und/oder Formmerkmale der dargestellten Person beschreiben, insbesondere Hautfarbe, Haarfarbe, und/oder Haarstruktur. Der Erscheinungsmerkmals-Tensor aₛ wird erhalten, indem von einem Erscheinungsmerkmals-Encoder 11 eine Vielzahl von zweidimensionalen Faltungsoperationen auf das Quellbild xₛ angewendet wird.

Der so erhaltene Erscheinungsmerkmals-Tensor gibt für jede Position in dem (zweidimensionalen) Koordinatensystem der erzeugten Faltung einen Merkmalsvektor an, welcher die Erscheinungsmerkmale angibt. Der Merkmalsvektor kann beispielsweise eine Dimension von der Größe 128, 256 oder 512 haben.

In Schritt S1.3 wird basierend auf dem Quellbild xₛ ein Quellposen-Latenzvektor zₛ erzeugt. Der Quellposen-Latenzvektor zₛ gibt die Pose bzw. Haltung/Ausrichtung des Kopfes in dem Quellbild xₛ an und dient als Referenz für die spätere Rekonstruktion der Eingabebilder auf Seite der Empfangseinheit B. Zum Erzeugen des Quellposen-Latenzvektors zₛ wird das Quellbild xₛ von einem Posen-Encoder 12 verarbeitet und ein Posen-Latenzvektor aus einem Latenzraum des Posen-Encoders 12 extrahiert. Der Posen-Latenzvektor zₛ kann beispielsweise eine Dimension der Größe 20 haben.

In Schritt S1.4a werden der Erscheinungsmerkmals-Tensor aₛ und der Quellposen-Latenzvektor zₛ von der Sendeeinheit A an die Empfangseinheit B übertragen. Die Empfangseinheit empfängt den Erscheinungsmerkmals-Tensor aₛ und den Quellposen-Latenzvektor zₛ entsprechend in Schritt S1.4b.

Die vorstehend beschriebenen Schritte S1.1 bis S1.4b schließen die Verarbeitung des Quellbilds ab und werden vorzugsweise nur einmalig während der Übertragung der Videobilddaten ausgeführt. Alternativ können die Schritte S1.1 bis S1.4b zu einem späteren Zeitpunkt während der Übertragung erneut ausgeführt werden, was in solchen Fällen vorteilhaft ist, in denen sich Erscheinungsmerkmale und/oder die Pose der dargestellten Position im Laufe Verlauf der Videobilddaten signifikant ändert.

In Schritt S2.1 wird ein Eingabebild xₜ (aus der Vielzahl von zu übertragenden Eingabebildern) geladen. Beispielsweise kann es sich um das (zeitlich) zweite Eingabebild handeln (d.h. t=2), wenn als Quellbild das erste Eingabebild (s=1) verwendet wurde.

In Schritt S2.2 wird für das Eingabebild xₜ mittels des Posen-Encoders 12 ein korrespondierender Posen-Latenzvektor zₜ erzeugt, der die Pose des auf dem Eingabebild xₜ dargestellten Kopfes angibt. Somit entspricht Schritt S2.2 im Wesentlichen dem Schritt S1.3, wobei in Schritt S2.2 das Eingabebild xₜ statt dem Quellbild xₛ verarbeitet wird.

In Schritt S2.3a wird der erhaltene Posen-Latenzvektor zₜ von der Sendeeinheit A an die Empfangseinheit B übertragen.

Die Schritte S2.1, S2.2 und S2.3a werden iterativ (z.B. t=2, 3, ..., n) ausgeführt, sodass die Eingabebilder der zu übertragenden Videobilddaten sukzessive verarbeitet werden.

In Schritt 2.3b wird der erzeugte Posen-Latenzvektor zt von der Empfangseinheit empfangen.

In Schritt S3.1 wird durch einen Kopfmodell-Generator 22 eine Zwischendarstellung wt basierend auf dem Quellposen-Latenzvektor zₛ und dem Posen-Latenzvektor zₜ erzeugt. Die Daten der erzeugten Zwischendarstellung wt können prinzipiell als Bilddaten aufgefasst werden, in denen Merkmale wie Pose des Kopfes, Gesichtsausruck, Kontur einer Brille, Frisur, Augen, erkennbar ist, allerdings keine Farb- oder sonstigen Erscheinungsmerkmale.

In Schritt S3.2 wird schließlich das Ausgabebild yₜ erzeugt, indem eine Warp-Einheit 21 eine Warp-Operation durchführt, basierend auf dem Erscheinungsmerkmals-Tensor aₛ und einem Flow-Tensor, der basierend auf der Zwischendarstellung wt erzeugt worden ist. Im Vergleich zur Zwischendarstellung wₜ enthalt das erzeugte Ausgabebild yₜ also auch Farb- und sonstige Erscheinungsmerkmale, die basierend auf den Informationen aus dem Erscheinungsmerkmals-Tensor aₛ rekonstruiert wurden.

Die Schritte S2.3b bis S3.2 dienen somit der Erzeugung des Ausgabebildes yₜ mittels Rekonstruktion des Eingabebildes xₜ anhand der aus dem Quellbild extrahierten Informationen (Erscheinungsmerkmals-Tensors aₛ und Quellposen-Latenzvektor zₛ) sowie der aus dem Eingabebild xₜ extrahierten Poseninformationen (Posen-Latenzvektor zₜ).

Entsprechend der Iteration der Schritte S2.1, S2.2 und S2.3a auf der Seite der Empfangseinheit A werden auch die Schritte S2.3b, S3.1 und S3.2 iterativ (z.B. t=2, 3, ..., n) ausgeführt, sodass die mit den Eingabebildern x₂, x₃, ..., xₙ korrespondierenden Ausgabebilder y₂, y₃, ..., yₙ entsprechend erzeugt werden.

Figur 2a zeigt den Aufbau des erfindungsgemäßen Systems gemäß einem Ausführungsbeispiel, sowie den Datenfluss in dem System. Das dargestellte System ist zur Ausführung des erfindungsgemäßen Verfahrens, insbesondere gemäß dem Ausführungsbeispiel aus Figur 1, ausgebildet. Insofern wird hinsichtlich der Funktionen der einzelnen Komponenten ergänzend auf die obigen Ausführungen im Zusammenhang mit Figur 1 verwiesen.

Das in Figur 2a dargestellte System umfasst die Sendeeinheit A und die Empfangseinheit B.

Die Sendeeinheit ist dazu ausgebildet, die zu übertragenden Videobilddaten als Folge von Eingabebildern x₁, ..., xₙ zu laden und ferner ein Quellbild xₛ zu laden, beispielsweise xₛ = x₁.

Die Sendeeinheit A umfasst den Erscheinungsmerkmals-Encoder 11 (z.B. ein erstes CNN), der dazu ausgebildet ist, durch eine Vielzahl von zweidimensionalen Faltungen des Eingabebilds xₛ den Erscheinungsmerkmals-Tensor aₛ zu erzeugen.

Die Sendeeinheit B umfasst ferner den Sendeeinheit-Posen-Encoder 12 (z.B. ein zweites CNN), der dazu ausgebildet ist, bei Eingabe des Quellbilds xₛ den Quellposen-Latenzvektors zₛ und bei Eingabe eines Eingabebildes xₜ den Posen-Latenzvektor zₜ zu erzeugen. Sowohl der Quellposen-Latenzvektors zₛ als auch der Posen-Latenzvektor zₜ stammen aus einem Latenzraum des Sendeeinheits-Posen-Encoders 12.

Die Sendeeinheit ist ferner dazu ausgebildet, (initial) den Erscheinungsmerkmals-Tensor aₛ und den Quellposen-Latenzvektor zₛ, sowie den Posen-Latenzvektor zₜ an die Empfangseinheit B zu übertragen. Die Empfangseinheit A ist dazu ausgebildet, diese Daten von der Sendeeinheit B zu empfangen.

Die Empfangseinheit B weist die Warp-Einheit 21 (z.B. ein drittes CNN) und den Kopfmodell-Generator 22 (z.B. ein viertes CNN) auf.

Der Kopfmodell-Generator 22 ist dazu ausgebildet, basierend auf den (Quell-)Posen-Latenzvektoren zₛ und zₜ eine Zwischendarstellung wₜ zu dem Eingabebild xₜ zu erzeugen und der Warp-Einheit 21 bereitzustellen.

Die Warp-Einheit 21 ist dazu ausgebildet, einen Flow-Tensor zu der Zwischendarstellung wt zu erzeugen und basierend darauf, sowie basierend auf dem Erscheinungsmerkmals-Tensor aₛ, das Ausgabebild yₜ zu dem Eingabebild xₜ zu erzeugen.

Figur 2b zeigt den Aufbau des erfindungsgemäßen Systems sowie den Datenfluss in dem System gemäß einem weiteren Ausführungsbeispiel.

Das in Figur 2b dargestellte System unterscheidet sich von dem System der Figur 2a dadurch, dass die Sendeeinheit A ferner die Blickrichtungs-Korrektureinheit 13 (z.B. ein fünftes CNN) aufweist. Diese ist dazu ausgebildet, basierend auf dem Posen-Latenzvektor zₜ einen modifizierten Posen-Latenzvektor z'ₜ zu erzeugen, der hinsichtlich der Blickrichtung der dargestellten Person modifiziert bzw. korrigiert ist.

Statt dem Posen-Latenzvektor zₜ wird der modifizierte Posen-Latenzvektor z'ₜ von der Sendeeinheit A an die Sendeeinheit B übertragen, und der Kopfmodell-Generator 22 erzeugt die Zwischendarstellung wt basierend auf dem modifizierten Posen-Latenzvektor z', statt dem (ursprünglichen) Posen-Latenzvektor zₜ.

Im Übrigen wird auf die Ausführungen zu dem System der Figur 2a verwiesen.

Alternativ zu dem in Figur 2b dargestellten Aufbau kann die Blickrichtungs-Korrektureinheit 13 auch in der Sendeeinheit B angeordnet sein, wobei der (ursprüngliche) Posen-Latenzvektor zₜ übertragen wird, und die Blickrichtungskorrektur auf Seite der Empfangseinheit B erfolgt.

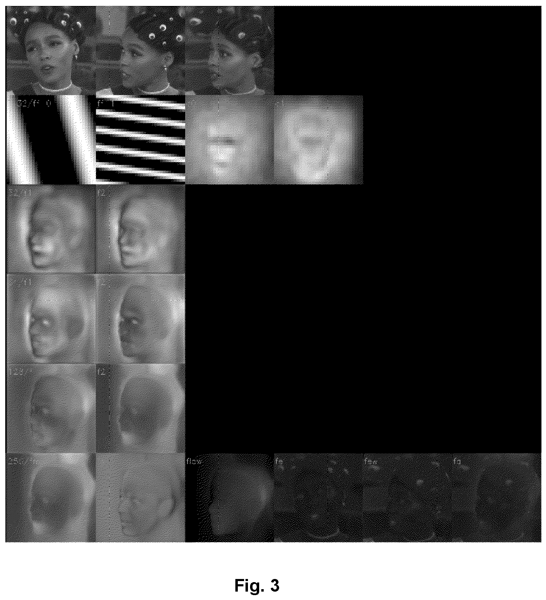

Figur 3 zeigt Beispielbilder, die beim Trainieren des in dem erfindungsgemäßen System eingesetzten Kopfmodell-Generators 22 sowie durch die Warp-Einheit 21 erzeugt werden.

In der obersten Zeile ist das Quell-Trainingsbild, in der Mitte das Ziel-Trainingsbild und auf der rechten Seite das durch das Verfahren erzeugte Bild der Trainings-Ausgabedarstellung gezeigt.

Die Bilder in den Zeilen 2 bis 6 veranschaulichen Veränderungen des Trainingsbildes, wobei die Auflösung der Bilder nach unten hin zunimmt.

Die zweite Zeile veranschaulicht die Sinuswellen der Fourier-Merkmale, wie sie von derm Kopfmodell-Generator 22 gewonnen werden. Die Bilder in den Zeilen 3 bis 5 zeigen die Verarbeitung durch einzelne Decoderblöcke (bzw. convolutional Layers). In den Zeilen 2 bis 5 werden somit Bilder bei der Verarbeitung durch das neuronale Netz des Kopfmodell-Generators 22 gezeigt. Das Kopfmodell wird auf Basis eines Latenzvektors erzeugt, wobei die Pose des Kopfes, die Kopfform und der Gesichtsausdruck rekonstruiert werden.

Die Bilder in der letzten Zeile unten zeigen dann die Verarbeitung mittels der Warp-Einheit 21. Die Bilder werden auf Basis der extrahierten Erscheinungsparameter des Erscheinungsmerkmals-Tensors aₛ, des Quell-Latenzvektors zₛ und des Posen-Latenzvektors zₜ erzeugt. Durch die Verarbeitung der Warp-Einheit werden dem Bild Farben hinzugefügt, beispielsweise die Augenfarbe, die Haarfarbe und die Gesichtsfarbe. Ferner werden Ergänzungen von schwarzen Bereichen hinzugefügt, welche durch beispielsweise die Drehung des Kopfes entstehen.

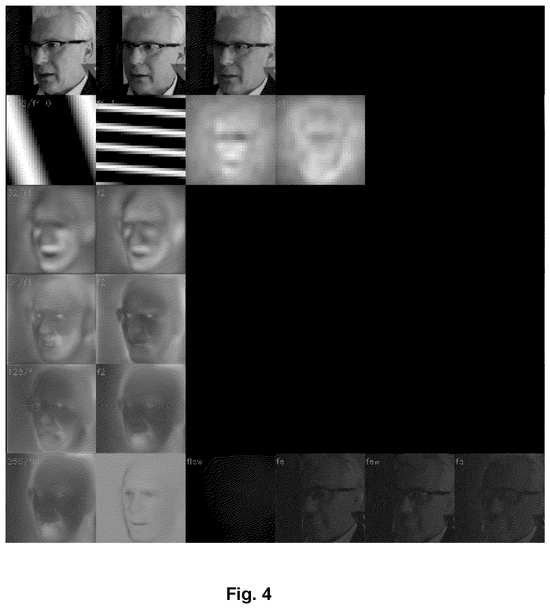

Analog zu der Darstellung der Figur 3 zeigt die Figur 4 weitere Beispielbilder, die während des Trainierens des Kopfmodell-Generators 21 und durch die Warp-Einheit 22 erzeugt wurden. Es zeigt sich, dass das Kopfmodell auch in der Lage ist, Darstellungen von Köpfen mit einer Brille und mit Haaren zu erlernen.

Die in dieser Beschreibung durch die Begriffe "Modul", "Einheit", "Komponente" etc. beschriebenen Einheiten können grundsätzlich wahlweise in Hardware oder Software implementiert werden, unabhängig davon, wie es in dieser Beschreibung ausgeführt ist. Ebenso können die beschriebenen Einheiten beliebig zusammengefasst oder voneinander getrennt implementiert werden, ohne vom Wesen der Erfindung abzuweichen.

An dieser Stelle sei darauf hingewiesen, dass alle oben beschriebenen Teile jeweils für sich - auch ohne im jeweiligen Zusammenhang zusätzlich beschriebene Merkmale, selbst wenn diese nicht explizit als optionale Merkmale im jeweiligen Zusammenhang individuell kenntlich gemacht worden sind, z. B. durch Verwendung von: insbesondere, vorzugsweise, beispielsweise, z. B., ggf. , runden Klammern, etc. - und in Kombination oder jeglicher Unterkombination als eigenständige Ausgestaltungen bzw. Weiterbildungen der Erfindung, wie sie insbesondere in der Beschreibungseinleitung sowie den Ansprüchen definiert ist, anzusehen sind. Abweichungen hiervon sind möglich. Konkret sei darauf hingewiesen, dass das Wort insbesondere oder runde Klammern keine im jeweiligen Kontext zwingende Merkmale kennzeichnen.

### Bezugszeichenliste

- 11: Erscheinungsmerkmals-Encoder
- 12: Posen-Encoder
- 13: Blickrichtungs-Korrektureinheit
- 21: Warp-Einheit
- 22: Kopfmodell-Generator

- A: Sendeeinheit
- B: Empfangseinheit

- aₛ: Erscheinungsmerkmals-Tensor
- xₛ: Quellbild
- xₜ: Eingabebild
- yₜ: Ausgabebild
- zₛ: Quellposen-Latenzvektor
- zₜ: Posen-Latenzvektor

- S1.1: Laden des Quellbilds
- S1.2: Erzeugen des Erscheinungsmerkmals-Tensors
- S1.3: Erzeugen des Quellposen-Latenzvektors
- S1.4a: Senden des Quellposen-Latenzvektors
- S1.4b: Empfangen des Quellposen-Latenzvektors
- S2.1: Laden eines Eingabebilds
- S2.2: Erzeugen des Posen-Latenzvektors
- S2.3a: Senden des Posen-Latenzvektors
- S2.3b: Empfangen des Posen-Latenzvektors
- S3.1: Erzeugen der Zwischendarstellung
- S3.2: Erzeugen des Ausgabebilds

## Patentansprüche

1. Datenübertragungsverfahren für Videobilddaten,
**dadurch gekennzeichnet, dass**
das Verfahren die folgenden Schritte umfasst:
a) Erkennen einer Darstellung einer Person basierend auf einem Quellbild (xₛ), umfassend
a1) Erzeugen, mittels eines Erscheinungsmerkmals-Encoders (11), eines Erscheinungsmerkmals-Tensors (aₛ),
wobei der Erscheinungsmerkmals-Tensor (aₛ) durch eine Vielzahl von zweidimensionalen Faltungen des Quellbilds (xₛ) erzeugt wird;
a2) Erzeugen, mittels eines Sendeeinheits-Posen-Encoders (12) oder Empfangseinheits-Posen-Encoders, eines Quellposen-Latenzvektors (zₛ) eines Latenzraums des Sendeeinheits-Posen-Encoders (12) oder Empfangseinheits-Posen-Encoders; und
b) Übertragen des Quellposen-Latenzvektors (zₛ) und des Erscheinungsmerkmals-Tensors (aₛ), oder alternativ des Quellbilds (xₛ), von einer Sendeeinheit (A) an eine Empfangseinheit (B);
c) Ausführen der folgenden Schritte für jedes Eingabebild (xₜ) von einer Vielzahl von Eingabebildern (x₁, ..., xₙ):
c1) Erkennen einer Pose für das Eingabebild (xₜ), indem für das Eingabebild (xₜ) mittels des Sendeeinheits-Posen-Encoders (12) ein Posen-Latenzvektor (zₜ) ermittelt wird;
c2) Übertragen des Posen-Latenzvektors (zₜ) von der Sendeeinheit (A) an die Empfangseinheit (B);
c3) Erzeugen, durch die Empfangseinheit (B), eines Ausgabebilds (yₜ) basierend auf dem Erscheinungsmerkmals-Tensor (aₛ), dem Quellposen-Latenzvektor (zₛ) und dem Posen-Latenzvektor (zₜ).

2. Datenübertragungsverfahren nach Anspruch 1,
wobei der Erscheinungsmerkmals-Tensor (aₛ) ein oder mehrere Erscheinungsmerkmale angibt, die Farbmerkmale und/oder Formmerkmale der dargestellten Person beschreiben, insbesondere Hautfarbe, Haarfarbe, und/oder Haarstruktur.

3. Datenübertragungsverfahren nach einem der vorhergehenden Ansprüche,
wobei der Quellposen-Latenzvektor (zₛ) und/oder der Posen-Latenzvektor (zₜ) eine Pose, Gesichtsausdruck und/oder Blickrichtung der dargestellten Person beschreibt.

4. Datenübertragungsverfahren nach einem der vorhergehenden Ansprüche,
wobei die Schritte a1) und a2) von der Sendeeinheit (A) ausgeführt werden und in Schritt b) nur der Quellposen-Latenzvektor (zₛ) und der Erscheinungsmerkmals-Tensor (aₛ) übertragen wird.

5. Datenübertragungsverfahren nach einem der vorhergehenden Ansprüche,
wobei die Schritte a1) und a2) von der Empfangseinheit (B) ausgeführt werden, nachdem in Schritt b) das Quellbild (xₛ) übertragen wurde.

6. Datenübertragungsverfahren nach einem der vorhergehenden Ansprüche,
wobei das Erzeugen des Ausgabebilds (yₜ) die folgenden Schritte umfasst:
- Erzeugen, durch einen Kopfmodell-Generator (22), einer Zwischendarstellung (wₜ) basierend auf dem Quellposen-Latenzvektor (zₛ) und dem Posen-Latenzvektor (zₜ); und
- Erzeugen des Ausgabebilds (yₜ) durch eine Warp-Einheit (21) basierend auf der Zwischendarstellung (wₜ) und dem Erscheinungsmerkmals-Tensor (aₛ).

7. Datenübertragungsverfahren nach einem der vorhergehenden Ansprüche,
wobei das Verfahren ferner das Erzeugen eines modifizierten Posen-Latenzvektors (z'ₜ) zu dem Posen-Latenzvektor (zₜ) umfasst, wobei der modifizierte Posen-Latenzvektor (z'ₜ) hinsichtlich einer Blickrichtung der dargestellten Person modifiziert ist,
wobei in Schritt c3) das Ausgabebild (yₜ) basierend auf dem Erscheinungsmerkmals-Tensor (aₛ), dem modifizierten Posen-Latenzvektor (z'ₜ) und dem Quellposen-Latenzvektor (zₛ) erzeugt wird.

8. Datenübertragungsverfahren nach einem der vorhergehenden Ansprüche,
wobei das Quellbild (xₜ) eines der Vielzahl von Eingabebildern (x₁, ..., xₙ) ist.

9. Verfahren zum Trainieren eines Videobilddaten-Datenübertragungsmodells,
das einen Erscheinungsmerkmals-Encoder (11), einen Posen-Encoders (12), einen Kopfmodell-Generator (22) und eine Warp-Einheit (21) umfasst,
wobei das Verfahren die folgenden Schritte aufweist:
a) Erkennen einer Darstellung einer Person basierend auf einem Quellbild (xₛ), umfassend
a1) Erzeugen, mittels des Erscheinungsmerkmals-Encoders (11), eines Erscheinungsmerkmals-Tensors (aₛ),
wobei der Erscheinungsmerkmals-Tensor (aₛ) durch eine Vielzahl von zweidimensionalen Faltungen des Quellbilds (xₛ) erzeugt wird;
a2) Erzeugen, mittels des Posen-Encoders (12), eines Quellposen-Latenzvektors (zₛ) eines Latenzraums des Posen-Encoders (12); und
b) Ausführen der folgenden Schritte für jedes Eingabebild (xₜ) einer Vielzahl von Eingabebildern (x₁, ..., xₙ):
b1) Erkennen einer Pose für das Eingabebild (xₜ), indem für das Eingabebild (xₜ) mittels des Posen-Encoders (12) ein Posen-Latenzvektor (zₜ) ermittelt wird;
b2) Erzeugen, durch den Kopfmodell-Generator (22), einer Zwischendarstellung (wₜ) basierend auf dem Quellposen-Latenzvektor (zₛ) und dem Posen-Latenzvektor (zₜ);
b3) Erzeugen des Ausgabebilds (yₜ) durch die Warp-Einheit (21) basierend auf der Zwischendarstellung (wₜ) und dem Erscheinungsmerkmals-Tensor (aₛ);
b4) Berechnen eines Verlustfunktionswerts basierend auf einem Vergleich zwischen dem Eingabebild (xₜ) und dem Ausgabebild (yₜ);
b5) Verändern von einem oder mehreren Parametern des Videobilddaten-Datenübertragungsmodells basierend auf dem Verlustfunktionswert.

10. Verfahren nach Anspruch 9,
wobei in Schritt b5) ein oder mehrere Parameter von dem Erscheinungsmerkmals-Encoder (11), dem Posen-Encoders (12), dem Kopfmodell-Generator (22) und/oder der Warp-Einheit (21) angepasst werden.

11. System zur Übertragung von Videobilddaten,
welches eine Sendeeinheit (A) und eine Empfangseinheit (B) aufweist,
wobei die Sendeeinheit (A) oder die Empfangseinheit (B) einen Erscheinungsmerkmals-Encoder (11) aufweist und dazu ausgebildet ist,
a) eine Darstellung einer Person zu erkennen, basierend auf einem Quellbild (xₛ), umfassend
a1) Erzeugen, mittels des Erscheinungsmerkmals-Encoders (11), eines Erscheinungsmerkmals-Tensors (aₛ),
wobei der Erscheinungsmerkmals-Tensor (aₛ) durch eine Vielzahl von zweidimensionalen Faltungen des Quellbilds (xₛ) erzeugt wird;
a2) Erzeugen, mittels eines Sendeeinheits-Posen-Encoders (12) oder eines Empfangseinheits-Posen-Encoders, eines Quellposen-Latenzvektors (zₛ) eines Latenzraums des Sendeeinheits-Posen-Encoders (12) oder eines Empfangseinheits-Posen-Encoders;
wobei die Sendeeinheit (A) dazu ausgebildet ist, die folgenden Schritte auszuführen:
b) Übertragen des Quellposen-Latenzvektors (zₛ) und des Erscheinungsmerkmals-Tensors (aₛ), oder alternativ des Quellbilds (xₛ), von der Sendeeinheit (A) an die Empfangseinheit (B);
c) Ausführen der folgenden Schritte für jedes Eingabebild (xₜ) von einer Vielzahl von Eingabebildern (x₁, ..., xₙ):
c1) Erkennen einer Pose für das Eingabebild (xₜ), indem für das Eingabebild (xₜ) mittels des Sendeeinheits-Posen-Encoders (12) ein Posen-Latenzvektor (zₜ) ermittelt wird;
c2) Übertragen des Posen-Latenzvektors (zₜ) von der Sendeeinheit (A) an die Empfangseinheit (B); und
wobei die Empfangseinheit (B) einen Kopfmodell-Generator (22) und eine Warp-Einheit (21) aufweist und dazu ausgebildet ist, für das Eingabebild (xₜ) von der Vielzahl von Eingabebildern (x₁, ..., xₙ) ein Ausgabebild (yₜ) zu erzeugen, das mit dem Eingangsbild (xₜ) korrespondiert, indem
- durch den Kopfmodell-Generator (22) basierend auf dem Quellposen-Latenzvektor (zₛ) und dem Posen-Latenzvektor (zₜ) eine Zwischendarstellung (wₜ) erzeugt wird; und
- durch die Warp-Einheit (21) basierend auf der Zwischendarstellung (wₜ) und dem Erscheinungsmerkmals-Tensor (aₛ) das Ausgabebild (yₜ) erzeugt wird.

12. System nach Anspruch 11,
wobei die Sendeeinheit (A) und/oder die Empfangseinheit (B) ferner eine Blickrichtungs-Korrektureinheit (13) aufweist, welche dazu ausgebildet ist, zu dem Posen-Latenzvektor (zₜ) einen modifizierten Posen-Latenzvektor (z'ₜ) zu erzeugen, der hinsichtlich einer Blickrichtung der dargestellten Person modifiziert ist,
wobei die Warp-Einheit (21) dazu ausgebildet ist, das Ausgabebild (yₜ) basierend auf dem Quellposen-Latenzvektor (zₛ), dem Erscheinungsmerkmals-Tensor (aₛ) sowie dem modifizierten Posen-Latenzvektor (z't) zu erzeugen.

13. System nach Anspruch 11 oder 12,
wobei der Erscheinungsmerkmals-Encoder (11), der Sendeeinheits-Posen-Encoders (12) und/oder der Empfangseinheits-Posen-Encoder, der Kopfmodell-Generator (22) und die Warp-Einheit (21) durch das Verfahren nach einem der Ansprüche 9 oder 10 trainiert worden ist.

14. Verwendung eines Datenübertragungsverfahrens nach einem der Ansprüche 1 bis 8 in einem Videokonferenzsystem.

15. Computerprogrammprodukt, umfassend Befehle, die bei der Ausführung des Programms durch mindestens einen Prozessor diesen veranlassen, ein Verfahren nach einem der Ansprüche 1 bis 10 auszuführen.
